Europäisches Patentamt

European Patent Office

Office européen des brevets

(19)

(11) Publication number: **0 248 140**
A2

(12) ## EUROPEAN PATENT APPLICATION

(21) Application number: **86850437.4**

(22) Date of filing: **12.12.86**

(51) Int. Cl.³: **F 23 L 15/04**

(30) Priority: **06.06.86 SE 8602574**

(43) Date of publication of application:
**09.12.87 Bulletin 87/50**

(84) Designated Contracting States:
**AT BE CH DE ES FR GB GR IT LI LU NL SE**

(71) Applicant: **Pettersson, Sune**
**Bryggerivägen 9**
**S-952 00 Kalix(SE)**

(72) Inventor: **Pettersson, Sune**
**Bryggerivägen 9**
**S-952 00 Kalix(SE)**

(74) Representative: **Sedvall, Bengt Gustaf**
**B. Sedvall Patentbyra Box 7182**
**S-103 88 Stockholm(SE)**

(54) **Method and device for operation of a heating boiler.**

(57) Method and device for operation of a heating boiler, which has a heat generator (14) within which a fuel is combusted under supply of oxygen in e.g. a gas such as air. At least a portion of the oxygen containing medium is preheated prior to the supply to the fuel. For example, there may be coupled into a feed conduit (12) for an oxygen containing gas to the heat generator (14) a preheating device (24) for preheating the gas.

EP 0 248 140 A2

./...

24

26

22

12

10

20

18

16

14

18

1

METHOD AND DEVICE FOR OPERATION OF A HEATING BOILER.

The present invention relates to a method and a device for operation of a heating boiler which has a heat generator, within which a fuel is combusted under supply of an oxygen containing gas such as air.

Presently existing heating boilers for gas and oil firing have a combustion efficiency of 70 to 90 %. For admixture of the oxygen containing gas, which usually is air, to the used fuel, there are used, as far as gas or oil are in question, blowing fans in the burners. As an alternative, the admixture of air can be effected by self-draught, but then the combustion efficiency is minor than that indicated above.

In order to improve the combustion efficiency in heating boilers "condensing boilers" have been developed. Common for these condensing boilers is the feature that the condensation is effected by means of cooling of the flue gases with water which is heated thereby and returned to the return pipe of the heating boiler or, as an alternative preheats the water intended to be consumed. In this way the mean annual efficiency is increased by returning the heat from the flue gases to the water system of the heating boiler or to the water heater.

The drawback inherent to the known system is that the heating plant must be of the type of low temperature system and in spite thereof the heat can be returned only when the heat consumption is high, i.e. during the colder part of the year only. With the alternative preheating of cold water to the water heater this method does not work but when hot water is being consumed. Another drawback is that the heating boilers must be made of stainless steel or some other corrosion-proof material.

The main object of the present invention is to provide a method for operation of a heating boiler in which the drawbacks described above are eliminated.

Another object is to provide a device in heating boilers for carrying out the method.

These and other objects are obtained thereby that the method for operation of a heating boiler and the device for carrying out the method have obtained the characterizing features stated in the subsequent claims.

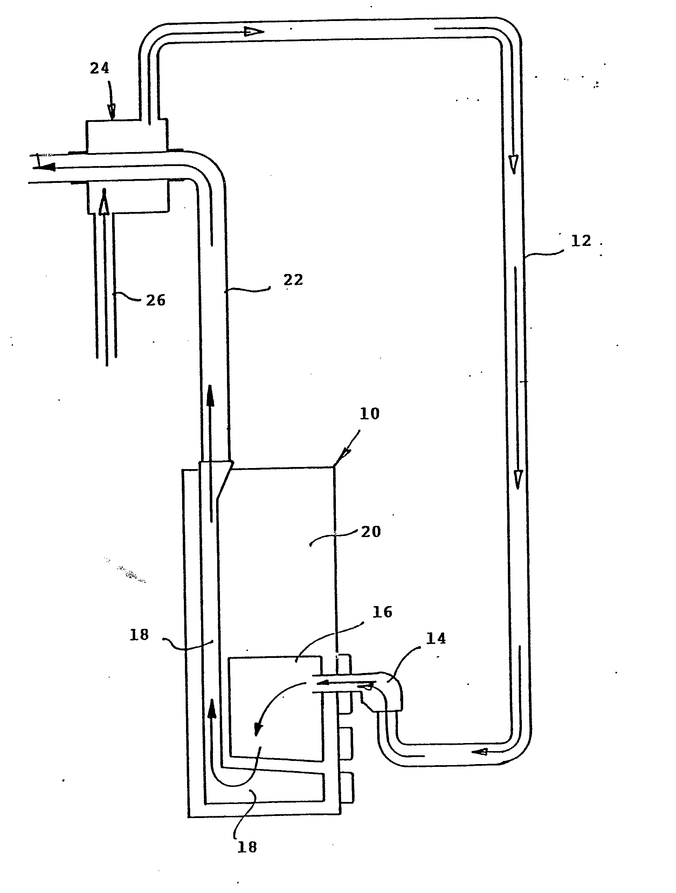

Further objects, characterizing features and advantages of the invention will become evident from the following description of a preferred embodiment of the device shown in the drawing.

The figure shows diagrammatically a heating boiler with a device for the operation thereof according to the invention.

The heating boiler 10 shown in the drawing may be of any known type within which a combustion of a fuel takes place under supply of an oxygen containing substance, usually a gas, such as air. The combustion air is supplied via the conduit 12 to the burner 14 arranged in the boiler according to the shown embodiment and which may be a burner for gas or oil. According to an alternative the fuel may also be of some other type, such as a solid fuel as will be described below. The mixture of combustion air and fuel is combusted in the combustion chamber 16 and the produced flue gases flow from the combustion chamber 16 out into the flue ducts 18 of the heating boiler which ducts lead upwards through the convection part 20 of the boiler 10. Located in the convection part 20 above the combustion chamber 16 and adjacent the flue gas ducts 18 is a reservoir (not shown) for the medium to be heated, usually water intended to be heated. After the passage through the flue ducts 18 of the heating boiler 10 the flue gases are withdrawn through a duct 22 in usual cases to a chimney (not shown) or the like.

According to the present invention the drawbacks described in the introductory part of this description are eliminated thereby that the exhaust or flue gases coming from the boiler 10 are condensed by means of air. This is effected by means of a heat exchanger 24, through which the flue gas duct 22 from the boiler 10 passes, whereunder a heat exchange takes place between the flue gases and the combustion gas, such as air, which is fed from outside to the heat exchanger 24 through a feed pipe 26 and which is removed from the heat exchanger by means of the conduit 12 connected to the burner 14 of the heating boiler 10.

The combustion air preheated by means of the flue gases in the heat exchanger 24 and which is conducted to the burner 14 is imparted an increase of volume by said preheating. The air preheated in this way which in the burner 14 is intermixed with the oil or gas, results in a heated mixture and augmentation of volume which with a minor quantity of supplied air affords an entirely clean combustion. The fan capacity of the burner and the magnitude of the flue gas heat exchanger determine the condensing point for the flue gases. With sufficient magnitude it is also possible in this way to dry the flue gases so as to render possible also to avoid precipitation of condensate in the chimney or waste gas exhaust channel.

A further advantage of the arrangement according to the invention is that the condensation heat is utilized during the entire running time of the burner and thus does not become dependent on the temperature of the heating system or possible consumption of hot water.

The annual medium combustion efficiency is increased to about 115 to 130 % calculated on the base of presently used methods. The temperatures in the chimney or flue gases are lowered to possible minimal temperatures which are the same as room temperature/exterior temperature.

In the device accordig to the invention the heat exchanger part only need to be made of non-corrodible material, since condensation occurs in this unit only. For this reason it is fully possible to apply this device to already existing boilers with fan burners where the supply conduit 12 for the combustion air easily can be connected to the burner 14. In other cases also it can be possible to adjoin the device according to the invention by a corresponding modification of the heating boiler 10. Thus it is possible to arrange in other types of boilers for gas or liquid fuel of the models of boilers working with self-draught or atmospheric combustion the same type of heat exchanger unit 24 with the alteration that the heat exchanger unit is equipped with a blowing fan. Such fan may be provided in the feed pipe 26 to the heat exchanger or in the conduit 12 from the heat exchanger to the boiler 10.

It is conceivable also to apply the invention with the last-mentioned variation to plants for solid fuels also.

The quantity of cooling air is adjusted by the temperature of the boiler water which governs the speed of the fan. This can be done by means of a sensor for the boiler water temperature coupled to a regulator for control of the speed of the fan. Alternately, the regulator may be coupled to one or several draught valves for regulation of the air quantity. If, for example, the speed of the fan is regulated, the speed of the fan is increased when the temperature of the boiler water is low, whereby a larger quantity of air is fed to the heat generator or the fire. The temperature of the flue gases is increased and cooled more effectively. When the temperature of the boiler water rises, the speed of the cooling air is reduced and a minor quantity of air is fed to the combustion, the temperature of the flue gases being lowered thereby. By the preheating effect the temperature in the fire is rised and a more effective combustion with purer flue gases than otherwise is possible.

Even when heating with solid fuel, the same effect as with an oil or gas fired boiler can be obtained when the combustion during the whole time becomes adapted to the power requirement. When heating with solid fuel, the air can be supplied either as primary air or, alternately, as secondary air.

It is evident from the abovesaid, that the method for operation of a heating boiler according to the invention as well as the device for carrying out the method afford many advantages when compared with conventional heating boilers of condensing or non-condensing types as well as their methods of operation. The invention is easy to realize in new and already existing boilers of most types irrespective of whether they are driven with oil, gas, liquid or solid fuels. The device is relatively simple and cheap, since the heat exchanger unit only has to be made of non-corrodible material. The heat exchanger part may be of any known type of air heat exchanger.

Another advantage of the invention consists therein that the cooled flue gases leaving the heat exchanger through the duct 22 receive such a low temperature that they very easily can be discharged in ducts or "chimneys" of some cheap material, such as plastic. As mentioned earlier, a drying also of the flue gases can be effected, so that any precipitation of condensates in the pipe conduit is avoided.

It is obvious that the shown and described embodiment is an example only of realizing the invention, and that alterations and modifications may be made without departing from the invention as it is defined in the subsequent claims.

6

C L A I M S

1. Method for operation of a heating boiler, which has a heat generator (14), within which a fuel is combusted under supply of an oxygen containing medium, preferably a gas, c h a r a c t e r i z e d in that at least a portion of the gas is preheated prior to the supply to the fuel.

2. Method as claimed in claim 1, c h a r a c t e r i z e d in that the preheating of the gas is effected by heat exchange with fuel gases escaping from the heating boiler.

3. Method as claimed in claim 1 or 2, c h a r a c t e r - i z e d in that the quantity of preheated gas which is supplied to the fuel, is adjusted in a heating boiler with water-borne heat by the temperature in the boiler water when the firing is effected with solid fuel.

4. Device for carrying out the method as claimed in any of the claims 1 to 3, comprising a heating boiler with a heat generator (14) within which a fuel is combusted under supply of an oxygen containing medium, such as a gas, c h a r a c t - e r i z e d in that coupled to the supply conduit (12) for the gas to the heat generator (14) is a preheating device (24) for preheating the gas before the same reaches the heat generator.

5. Device as claimed in claim 4, c h a r a c t e r i z e d in that the preheating device comprises a heat exchanger (24), attached to which is a duct (22) for the flue gases from the heating boiler (10), which gases are guided in thermal connection with the firstmentioned gas.

6.  Device as claimed in claim 4 or 5, c h a r a c t e r - i z e d  in that the supply conduit (12) for the gas is coupled to a burner (14) for oil- or gas-firing of the boiler (10).

7.  Device as claimed in claim 4 or 5, c h a r a c t e r - i z e d  in that the gas is fed to the heat generator in the heating boiler (10) by means of a fan operative in the supply conduit (12).

8.  Device as claimed in claim 6 or 7 in heating boilers operated with water-borne heat, c h a r a c t e r i z e d by a sensor for the temperature of the boiler water, which sensor is coupled to the burner fan or the fan operative in the feed conduit via a regulator for adjustment of the speed of the fan.